# EUROPÄISCHE PATENTSCHRIFT

(11) **EP 3 892 902 B1**
(45) Veröffentlichungstag und Bekanntmachung des Hinweises auf die Patenterteilung: **27.04.2022**
(21) Anmeldenummer: 21160131.5
(22) Anmeldetag: 02.03.2021
(51) Int. Cl.: F16L 17/025, F16L 17/06, F16L 27/08

(54) **ROHRVERBINDUNGSVORRICHTUNG**
PIPE CONNECTION DEVICE
DISPOSITIF DE RACCORD DE TUYAUX

(30) Priorität: 06.04.2020 DE 202020101870 U
(43) Veröffentlichungstag der Anmeldung: 13.10.2021
(73) Patentinhaber: SVT GmbH, 58332 Schwelm (DE)
(72) Erfinder: Friedrich, Meikel Daniel, 35649 Bischoffen (DE); Raisig, Paul, 44869 Bochum (DE)
(74) Vertreter: dompatent von Kreisler Selting Werner - Partnerschaft von Patent- und Rechtsanwälten mbB

(56) Entgegenhaltungen:
- CN-U- 202 501 132
- CN-U- 203 099 163
- CN-Y- 2 725 266
- DE-A- 2 900 354

## Beschreibung

Die Erfindung betrifft eine Rohrverbindungvorrichtung zur Verbindung von Rohren. Die Rohrverbindungsvorrichtung ist insbesondere für den Transport von Tieftemperatur-Flüssigkeiten geeignet.

Beim Transport von Tieftemperatur-Flüssigkeiten werden an Rohrverbindungsvorrichtungen, insbesondere gelenkige Rohrverbindungsvorrichtungen, hohe Anforderungen gestellt. Bei Tieftemperatur-Flüssigkeiten handelt es sich beispielsweise um Flüssiggas, das bei Temperaturen von insbesondere weniger als -150° C transportiert wird. Beispielsweise wird LMG bei einer Temperatur von ca. -164° C transportiert. Neben starren Rohrverbindungen gibt es auch Anwendungsfälle, in denen insbesondere aufgrund des Auftretens von Relativbewegungen gelenkige Rohrverbindungen erforderlich sind. Dies ist beispielsweise der Fall, wenn Flüssiggas an einer Verladestation in einen Tank eines Schiffs gepumpt wird, da zwischen der Ladestation und dem Schiff stets eine Relativbewegung stattfindet.

Bekannte gelenkige Rohrverbindungsvorrichtungen weisen zwei Verbindungselemente zum Verbinden mit jeweils einem Rohrende auf. Diese Verbindungselemente weisen insbesondere einen runden Innenquerschnitt auf, in den die Rohrenden eingesteckt und fixiert werden. Die beiden Verbindungselemente sind jeweils mit einem Lagerelement verbunden. Die Verbindung kann hierbei über Flansche erfolgen, die beispielsweise an den Verbindungselementen vorgesehen sind. Die Verbindung selbst kann sodann über Schraubverbindungen oder dergleichen erfolgen. Die beiden Lagerelemente überdecken sich zumindest teilweise in Längsrichtung, d.h. in Förderrichtung der Flüssigkeit. Zwischen den Lagerelementen sind zur Ausbildung der gelenkigen Rohrverbindungsvorrichtung Lager angeordnet. Beispielsweise kann es sich hierbei um in umlaufenden Nuten angeordnete Kugeln handeln. Zur Ausbildung der Kugellaufbahnen können die beiden Lagerschalen jeweils einander gegenüberliegende umlaufende sphärische Nuten aufweisen.

Des Weiteren weist die bekannte Rohrverbindungsvorrichtung ein Innenteil auf, das von den beiden Lagerelementen umgeben ist. Das rohrförmig ausgebildete Innenteil bildet zusammen mit den beiden Verbindungselementen einen, üblicherweise kreiszylindrischen, Innenraum aus. Durch diesen Innenraum wird das Fluid, wie insbesondere verflüssigtes Gas, gefördert. Aufgrund der im Gelenk auftretende Relativbewegungen ist es erforderlich, Dichtungen vorzusehen. Hierzu ist zwischen dem Innenteil und einem der Verbindungselemente eine umlaufende, in Richtung des Innenraums, offene Nut vorgesehen. In dieser ist eine Primärdichtung angeordnet. Die Primärdichtung kann einen U-förmigen Querschnitt aufweisen, wobei die Öffnung des U's nach innen in Richtung des Innenraums weist. Dieses ... ist ringförmig ausgebildet. Eine entsprechende Nut mit einer weiteren Primärdichtung ist üblicherweise auch zwischen dem Innenteil und dem zweiten Verbindungselement angeordnet. Ferner ist zwischen dem Innenteil und einem der Verbindungselemente eine umlaufende geschlossene Kammer ausgebildet, in der eine Sekundärdichtung angeordnet ist.

Während des Betriebes kann es vorkommen, dass geringe Mengen an Flüssiggas in die Kammer eindringen, in der die Sekundärdichtung angeordnet ist. Dies ist während des Betriebs nicht schädlich. Nach dem Betrieb erwärmt sich die gesamte Anordnung wieder auf Umgebungstemperatur. Ein Erwärmen von Flüssiggas, beispielsweise LMG von -164° C auf Raumtemperatur führt dazu, dass sich das Volumen um das 600-fache vergrößert. Dies hat zur Folge, dass bereits bei geringen Mengen an Flüssiggas, das in die Kammer eingedrungen ist, in der die Sekundärdichtung vorhanden ist, dazu führt, dass die Primärdichtung beschädigt werden kann. Insbesondere bei Primärdichtungen mit großem Durchmesser von beispielsweise mehr als 300 mm, insbesondere mehr als 400 mm, besteht hier ein erhebliches Risiko. Die Dichtungen können ferner nur mit viel Aufwand ausgewechselt werden.

Eine Rohrverbindungsvorrichtung mit den Merkmalen des Oberbegriffs des Anspruchs 1 ist in CN 203099163 U beschrieben.

Aufgabe der Erfindung ist es eine Rohrverbindungsvorrichtung, wie vorstehend beschrieben, zu schaffen, bei der das Risiko des Beschädigens einer Dichtung insbesondere durch expandierendes Gas bei der Erwärmung verringert ist.

Die Lösung der Aufgabe erfolgt erfindungsgemäß durch eine Rohrverbindungsvorrichtung mit den Merkmalen des Anspruchs 1.

Die erfindungsgemäße Rohrverbindungsvorrichtung weist ebenfalls zwei Verbindungselemente zum Verbinden mit jeweils einem Rohrende auf. Ferner sind zwei Lagerelemente vorgesehen, die jeweils mit einem der beiden Verbindungselemente verbunden sind. Die Lagerelemente überdecken sich in Längsrichtung teilweise. Zwischen den Lagerelementen ist ein Lager vorgesehen, das insbesondere Kugeln aufweist. Ferner ist ein von den Lagerelementen umgebenes rohrförmiges Innenteil vorgesehen. Bei dem Innenteil handelt es sich vorzugsweise um ein gesondertes Teil, wobei das Innenteil auch einstückig mit einem, insbesondere dem inneren der beiden Lagerelemente ausgebildet sein kann. Die beiden Verbindungselemente und das Innenteil bilden einen Innenraum aus, durch den das Fluid während des Betriebs strömt. In einer zwischen dem Innenteil und einem der Verbindungselemente vorgesehenen umlaufenden Nut, die in Richtung des Innenraums offen ist, ist eine Primärdichtung angeordnet. Diese weist vorzugsweise einen U-förmigen Querschnitt auf. Vorzugsweise ist die Dichtung derart angeordnet, dass der U-förmige Querschnitt in Richtung des Innenraums offen ist.

Des Weiteren ist zwischen dem Innenteil und einem der Verbindungselemente eine umlaufende geschlossene Kammer vorgesehen. In dieser Kammer ist die Sekundärdichtung angeordnet. Die Sekundärdichtung ist im Querschnitt vorzugsweise ebenfalls U-förmig ausgebildet. Die Öffnung des U's weist hierbei vorzugsweise nach innen in Richtung des Innenraums.

Erfindungsgemäß findet zwischen der Kammer und dem Innenraum ein Druckausgleich statt. Hierzu ist es bevorzugt, dass die Kammer mit dem Innenraum insbesondere direkt verbunden ist.

Erfindungsgemäß ist die Kammer über einen Verbindungskanal mit dem Innenraum verbunden. Bei dem Verbindungskanal handelt es sich erfindungsgemäß um einen Druckausgleichskanal zwischen der Kammer und dem Innenraum. Besonders bevorzugt ist es, dass in dem Verbindungskanal ein Rückschlagventil angeordnet ist. Sofern während des Betriebes Flüssiggas in die Kammer eindringt, kann diese entweder unmittelbar bereits während des Betriebes, bei entsprechend auftretenden Druckdifferenzen wieder in den Innenraum abgeführt werden, oder das Gas entweicht über den Verbindungskanal nach dem Betrieb, sobald insbesondere aufgrund der Erwärmung des Gases entsprechende Druckdifferenzen auftreten. Hierdurch ist ein Beschädigen der Primärdichtung durch expandierendes Gas vermieden oder zumindest erheblich reduziert. Das Rückschlagventil ist derart ausgebildet, dass Fluid nur aus der Kammer in den Innenraum strömen kann.

Des Weiteren ist es bevorzugt, dass bei einer Druckdifferenz zwischen Kammer und Innenraum von 0,1 bar bis 0,3 bar, insbesondere 0,15 bar - 0.25 bar ein Öffnen des Rückschlagventils erfolgt. In bevorzugter Ausführungsform weist der Verbindungskanal einen Durchmesser von ca. 4 mm -6 mm auf. Das Rückschlagventil weist einen entsprechenden Außendurchmesser auf.

In besonders bevorzugter Ausführungsform der Erfindung ist der Verbindungskanal in einem Bereich angeordnet, dass dieser in Einbaulage der Rohrverbindungseinrichtung unten angeordnet ist. Dies hat den Vorteil, dass bereits während des Betriebs ggf. in der Kammer angeordnete Flüssigkeit bei einer entsprechenden Druckdifferenz in den Innenraum entweichen kann. Auch nach dem Betrieb hat dies den Vorteil, dass das Gas in noch flüssigem Zustand bereits aus der Kammer entweicht.

Die Kammer kann nicht nur von dem Innenteil und einem der beiden Verbindungselemente, sondern zusätzlich auch noch von einem der beiden Lagerelemente, insbesondere der beiden Lagerelemente begrenzt sein.

Nachfolgend wird die Erfindung anhand einer bevorzugten Ausführungsform unter Bezugnahme auf die anliegenden Zeichnungen näher erläutert.

Es zeigen:
- Figur 1: einen schematischen Längsschnitt an einer erfindungsgemäßen Ausführungsform der Druckverbindungsvorrichtung und
- Figur 2: eine Vergrößerung des in Figur 1 mit II bezeichneten Bereichs.

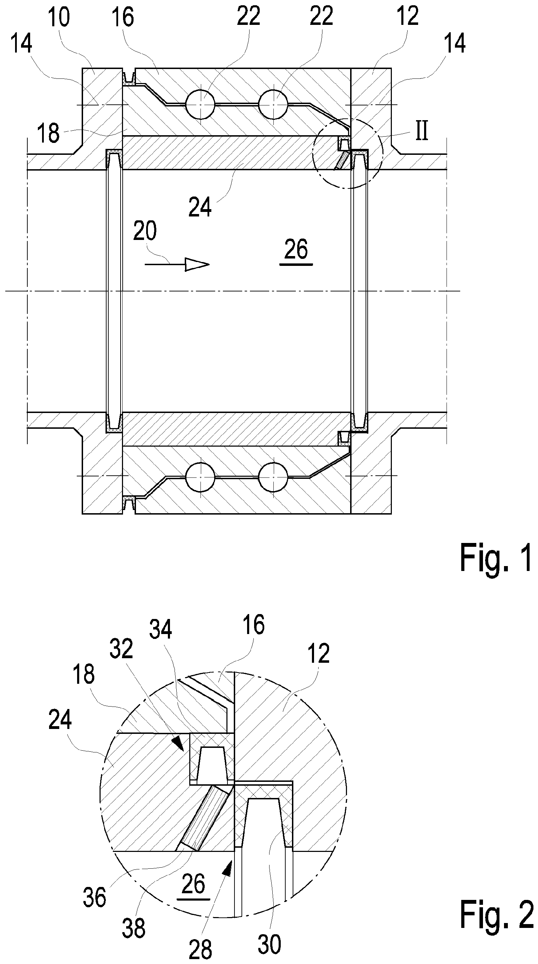

Die Rohrverbindungsvorrichtung weist zwei Verbindungselemente 10, 12 auf. Das in Figur 1 linke Rohrverbindungselement 10 ist im dargestellten Ausführungsbeispiel über eine Schraubverbindung 14 mit einem inneren Lagerelement 16 fest verbunden. Das in Figur 1 rechte Verbindungselement 12 ist ebenfalls über eine Schraubverbindung 14 mit einem äußeren Lagerelement 18 verbunden. Die beiden Lagerelemente 16, 18 überdecken einander in Längsrichtung 20. Zwischen den beiden Lagerelementen 16, 18 sind Kugeln 22 zur Ausbildung eines Lagers angeordnet.

Des Weiteren ist zwischen den beiden Verbindungselementen 10, 12 ein rohrförmiges Innenteil 24 angeordnet. Das rohrförmige Innenteil 24 ist innerhalb der beiden Lagerelemente 16, 18 angeordnet.

Die beiden Verbindungselemente 10, 12 bilden zusammen mit dem Innenteil 24 einen kreiszylinderförmigen Innenraum 26 aus.

Figur 2 zeigt den Bereich, in dem im Wesentlichen die Relativbewegungen auftreten können. In diesem Bereich ist zwischen dem Verbindungselement 12 und dem Innenteil 24 eine umlaufende Nut 28 ausgebildet. Im dargestellten Ausführungsbeispiel ist die umlaufende Nut vollständig innerhalb des Verbindungselements 12 ausgebildet. In der Nut 28 ist eine im Querschnitt U-förmige Primärdichtung 30 angeordnet. Die Öffnung der U-förmigen Primärdichtung 30 weist in Richtung des Innenraums 26.

Ferner ist zwischen dem Verbindungselement 12 und dem Innenteil 24 eine Kammer 32 ausgebildet. Innerhalb der Kammer 32 ist eine im Querschnitt wiederum U-förmige Sekundärdichtung 34 angeordnet. Die Sekundärdichtung 34 ist derart angeordnet, dass ihre Öffnung in Richtung des Innenraums 26 weist. Ferner ist die Kammer 32 mit dem Innenraum 26 über einen Verbindungskanal 36 verbunden. Der Verbindungskanal 36 dient zum Druckausgleich zwischen der Kammer 32 und dem Innenraum 26. Des Weiteren ist in dem Verbindungskanal 36 ein nur schematisch dargestelltes Rückschlagventil 38 angeordnet.

## Patentansprüche

1. Rohrverbindungsvorrichtung zur Verbindung von Rohren für den Transport von Tieftemperatur-Flüssigkeiten, mit
zwei Verbindungselementen (10, 12) zum Verbinden mit jeweils einem Rohrende,
zwei jeweils mit einem der Verbindungselemente (10, 12) verbundenen Lagerelemente (16, 18), die sich in Längsrichtung (20) teilweise überdecken,
ein zwischen den Lagerelementen (16, 18) angeordnetes Lager (22),
ein von den Lagerelementen (16,18) umgebenes rohrförmiges Innenteil (24), wobei die Verbindungselemente (10, 12) und das Innenteil (24) einen Innenraum (26) ausbilden, durch den die Flüssigkeit gefördert wird,
einer zwischen dem Innenteil (24) und einem der Verbindungselemente (10, 12) vorgesehenen umlaufenden in den Innenraum offenen Nut (28) in der eine Primärdichtung (30) angeordnet ist und
einer zwischen dem Innenteil (24) und einem der Verbindungselemente (12) vorgesehenen umlaufenden geschlossenen Kammer (32), in der eine Sekundärdichtung (34) angeordnet ist,
wobei zwischen der Kammer (32) und dem Innenraum (26) ein Druckausgleich stattfindet,
**dadurch gekennzeichnet, dass**
die Kammer (32) mit dem Innenraum (26) über einen als Druckausgleichskanal dienenden Verbindungskanal (36) verbunden ist.

2. Rohrverbindungsvorrichtung nach Anspruch 1, **dadurch gekennzeichnet, dass** in dem Verbindungskanal (36) ein Rückschlagventil (38) angeordnet ist, derart, dass Fluid nur aus der Kammer (32) in den Innenraum (26) strömen kann.

3. Rohrverbindungsvorrichtung nach Anspruch 2, **dadurch gekennzeichnet, dass** das Rückschlagventil (38) als Tellerventil ausgebildet ist.

4. Rohrverbindungsvorrichtung nach Anspruch 2 oder 3, **dadurch gekennzeichnet, dass** das Rückschlagventil (38) bei 0,1 bar bis 0,3 bar, insbesondere 0,15 bar bis 0,25 bar Druckdifferenz öffnet.

5. Rohrverbindungsvorrichtung nach Anspruch 1 bis 4, **dadurch gekennzeichnet, dass** der Verbindungskanal (36) in Einbaulage der Rohrverbindungsvorrichtung unten angeordnet ist.

6. Rohrverbindungsvorrichtung nach Anspruch 1 bis 5, **dadurch gekennzeichnet, dass** die Kammer (32) zusätzlich von einem der beiden Lagerelemente (16), insbesondere dem inneren der beiden Lagerelemente begrenzt ist.

7. Rohverbindungvorrichtung nach Anspruch 1 bis 6, **dadurch gekennzeichnet, dass** die Primärdichtung (30) und die Sekundärdichtung (34) zwischen dem Innenteil (24) und demselben Verbindungselement (12) angeordnet sind.

8. Rohrverbindungvorrichtung nach Anspruch 1 bis 7, **dadurch gekennzeichnet, dass** die Primärdichtung (30) und die Sekundärdichtung (34) zwischen dem Innenteil (24) und demjenigen Verbindungelement (12) angeordnet ist, zwischen denen im Betrieb Relativbewegung auftritt.

9. Rohrverbindungsvorrichtung nach Anspruch 1 bis 8, **dadurch gekennzeichnet, dass** zwischen dem Innenteil (24) und dem weiteren Verbindungselement (10) eine zweite umlaufende in den Innenraum (26) offene Nut (28) vorgesehen ist, in der eine weitere Primärdichtung (30) angeordnet ist.

10. Rohrverbindungsvorrichtung nach Anspruch 1 bis 9, **dadurch gekennzeichnet, dass** der Innenraum (26) einen Durchmesser von einen Durchmesser von mehr als 300 mm, insbesondere mehr als 400 mm aufweist.

## Claims

1. A pipe connecting device for connecting pipes for the transport of low-temperature liquids, comprising:
two connecting elements (10, 12) for connecting to a respective pipe end,
two bearing elements (16, 18) respectively connected to one of the connecting elements (10, 12) and partially overlapping each other in the longitudinal direction (20),
a bearing (22) arranged between the bearing elements (16, 18),
a tubular interior part (24) surrounded by the bearing elements (16, 18), wherein the connecting elements (10, 12) and the interior part (24) define an interior space (26) through which the liquid is supplied,
a circumferential groove (28), open towards the interior space, provided between the interior part (24) and one of the connecting elements (10, 12), in which groove a primary seal (30) is arranged, and
a circumferential closed chamber (32) provided between the interior part (24) and one of the connecting elements (12), in which chamber a secondary seal (34) is arranged,
wherein between the chamber (32) and the interior space (26) a pressure compensation takes place,
**characterized in that**
the chamber (32) is connected to the interior space (26) via a connecting duct (36) serving as a pressure compensation duct.

2. The pipe connecting device according to claim 1, **characterized in that** a check valve (38) is arranged in the connecting duct (36) such that a fluid can only flow from the chamber (32) into the interior space (26).

3. The pipe connecting device according to claim 2, **characterized in that** the check valve (38) is configured as a disk valve.

4. The pipe connecting device according to claim 2 or 3, **characterized in that** the check valve (38) opens at a pressure difference of 0.1 bar to 0.3 bar, in particular 0.15 bar to 0.25 bar.

5. The pipe connecting device according to claim 1 to 4, **characterized in that** the connecting duct (36) is arranged at the bottom in the installation position of the pipe connecting device.

6. The pipe connecting device according to claim 1 to 5, **characterized in that** the chamber (32) is additionally delimited by one of the two bearing elements (16), in particular the interior one of the two bearing elements.

7. The pipe connecting device according to claim 1 to 6, **characterized in that** the primary seal (30) and the secondary seal (34) are arranged between the interior part (24) and the same connecting element (12).

8. The pipe connecting device according to claim 1 to 7, **characterized in that** the primary seal (30) and the secondary seal (34) are arranged between the interior part (24) and that connecting element (12) between which a relative movement occurs during operation.

9. The pipe connecting device according to claim 1 to 8, **characterized in that** a second circumferential groove (28), open towards the interior space (26), is provided between the interior part (24) and the further connecting element (10), in which groove another primary seal (30) is arranged.

10. The pipe connecting device according to claim 1 to 9, **characterized in that** the interior space (26) has a diameter of a diameter of more than 300 mm, in particular more than 400 mm.

## Revendications

1. Dispositif de raccordement de tubes permettant de raccorder des tubes destinés au transport de fluides à basse température, comprenant
deux éléments de raccordement (10, 12) permettant un raccordement à une extrémité de tube respective,
deux éléments de palier (16, 18) respectivement raccordé à l'un des éléments de raccordement (10, 12) et se chevauchant partiellement dans la direction longitudinale (20),
un palier (22) agencé entre les éléments de palier (16, 18),
une partie intérieure tubulaire (24) entourée par les éléments de palier (16, 18), les éléments de raccordement (10, 12) et la partie intérieure (24) formant un espace intérieur (26) à travers lequel le fluide est transporté,
une rainure (28) circonférentielle ouverte vers l'espace intérieur, prévue entre la partie intérieure (24) et un des éléments de raccordement (10, 12) et dans laquelle est agencé un joint d'étanchéité primaire (30), et
une chambre (32) circonférentielle fermée, prévue entre la partie intérieure (24) et un des éléments de raccordement (12) et dans laquelle est agencé un joint d'étanchéité secondaire (34),
une égalisation de pression ayant lieu entre la chambre (32) et l'espace intérieur (26),
**caractérisé en ce que**
la chambre (32) est reliée à l'espace intérieur (26) par l'intermédiaire d'un canal de raccordement (36) servant de canal d'égalisation de pression.

2. Dispositif de raccordement de tubes selon la revendication 1, **caractérisé en ce qu'**une soupape anti-retour (38) est agencée dans le canal de raccordement (36) de telle manière que le fluide ne puisse s'écouler que de la chambre (32) vers l'espace intérieur (26).

3. Dispositif de raccordement de tubes selon la revendication 2, **caractérisé en ce que** la soupape anti-retour (38) est réalisée sous la forme d'une soupape à siège plan.

4. Dispositif de raccordement de tubes selon la revendication 2 ou 3, **caractérisé en ce que** la soupape anti-retour (38) s'ouvre pour une différence de pression comprise entre 0,1 bar et 0,3 bar, en particulier comprise entre 0,15 bar et 0,25 bar.

5. Dispositif de raccordement de tubes selon les revendications 1 à 4, **caractérisé en ce que** le canal de raccordement (36) est agencé vers le bas en position assemblée du dispositif de raccordement de tubes.

6. Dispositif de raccordement de tubes selon les revendications 1 à 5, **caractérisé en ce que** la chambre (32) est délimitée en outre par l'un des deux éléments de palier (16), en particulier par l'élément intérieur des deux éléments de palier.

7. Dispositif de raccordement de tubes selon les revendications 1 à 6, **caractérisé en ce que** le joint d'étanchéité primaire (30) et le joint d'étanchéité secondaire (34) sont agencés entre la partie intérieure (24) et le même élément de raccordement (12).

8. Dispositif de raccordement de tubes selon les revendications 1 à 7, **caractérisé en ce que** le joint d'étanchéité primaire (30) et le joint d'étanchéité secondaire (34) sont agencés entre la partie intérieure (24) et celui (12) des éléments de raccordement entre lesquels un mouvement relatif se produit pendant le fonctionnement.

9. Dispositif de raccordement de tubes selon les revendications 1 à 8, **caractérisé en ce qu'**une seconde rainure (28) périphérique, ouverte vers l'espace intérieur (26) et dans laquelle est agencé un joint d'étanchéité primaire (30) supplémentaire, est prévue entre la partie intérieure (24) et l'élément de raccordement (10) supplémentaire.

10. Dispositif de raccordement de tubes selon les revendications 1 à 9, **caractérisé en ce que** l'espace intérieur (26) présente un diamètre supérieur à 300 mm, en particulier supérieur à 400 mm.
